# EUROPÄISCHE PATENTANMELDUNG

(11) **EP 2 815 839 A1**
(43) Veröffentlichungstag der Anmeldung: **24.12.2014**
(21) Anmeldenummer: 13173150.7
(22) Anmeldetag: 21.06.2013
(51) Int. Cl.: B23K 26/34, B22F 5/04

(54) **Verfahren zum Reparieren einer Turbinenschaufel**

(71) Anmelder: Siemens Aktiengesellschaft, 80333 München (DE)
(72) Erfinder: Borgmann, Christian, 46284 Dorsten (DE); Gollerthan, Susanne, 44787 Bochum (DE); Lohmann, Hans-Peter, 46485 Wesel-Obrighoven (DE); Nötzel, Annett, 45470 Mülheim an der Ruhr (DE); Rehnsch, Andreas, 45131 Essen (DE); Reinkensmeier, Ingo, 10559 Berlin (DE); Schürhoff, Jörg, 45479 Mülheim a.d. Ruhr (DE)

(57) **Zusammenfassung**

Die Erfindung betrifft ein Verfahren zum Reparieren einer Turbinenschaufel, wobei die Turbinenschaufel ein durch Erosion beschädigten Bereich aufweist, der zunächst materialabtragend entfernt wird und durch das Selective Laser Melting-Verfahren wieder aufgebaut wird, wobei ein Werkstoff mit höherem Erosionswiderstand verwendet wird.

## Beschreibung

Die Erfindung betrifft ein Verfahren zum Reparieren einer Turbinenschaufel.

Turbinenschaufeln werden beispielsweise in Dampfturbinen eingesetzt. Insbesondere Turbinenschaufeln, die in einer Niederdruck-Teilturbine eingesetzt werden, sind an ihren Eintrittskanten durch Tropfenschlagerosion besonders starkem Verschleiß unterworfen. Der Grund dafür liegt darin, dass bei Niederdruck-Teilturbinen sich im Dampfstrom Nebeltröpfchen bilden können, die von den Leitschaufeln eingefangen werden, dort akkumulieren und von den Austrittskanten als Wassertropfen abreißen. Diese Wassertropfen führen in Folge hoher Umfangsgeschwindigkeiten und bestimmter Strömungen an den Laufschaufeln zu einer Oberflächenzerrüttung und dadurch zu der Tropfenschlagerosion. Nachteilig ist hierbei, dass die Tropfenschlagerosion zu einem Materialverlust und dadurch zu einem Wirkungsgradverlust und einer Veränderung des Schwingungsverhaltens der Laufschaufeln führt. Dadurch können sich ggf. Betriebseinschränkungen ergeben.

Es sind mehrere Möglichkeiten bekannt, die Tropfenschlagerosion an Turbinenschaufeln zu reduzieren. Beispielweise werden eine Stufenentwässerung, eine Eintrittskantenhärtung der Laufschaufeln oder eine Leitschaufel mit Heizung oder Entwässerung eingesetzt.

Sofern Turbinenschaufeln besonders stark durch die Tropfenschlagerosion beschädigt wurden, werden sie ausgetauscht, was zu hohen Kosten führt.

Aufgabe der Erfindung ist es, ein kostengünstiges Verfahren zum Reparieren von Turbinenschaufeln anzugeben.

Gelöst wird diese Aufgabe durch ein Verfahren zum Reparieren einer Turbinenschaufel, wobei die Turbinenschaufel einen geschädigten Bereich aufweist und dieser Bereich definiert materialabtragend entfernt wird und anschließend ein Werkstoff in Pulverform auf dem Bereich angeordnet und mittels einer Energiestrahlung lokal umgeschmolzen wird und nach Erstarrung eine feste Materialschicht bildet, wobei eine weitere dünne Schicht des Werkstoffs in Pulverform auf die feste Materialschicht aufgebracht und mittels der Energiestrahlung lokal umgeschmolzen wird und nach Erstarrung eine feste Materialschicht bildet.

Somit wird vorgeschlagen, beschädigte Turbinenschaufeln derart zu bearbeiten, dass der tropfenschlagerodierte Bereich, wie z.B. der Eintrittskantenbereich, der Austrittskantenbereich oder die Deckplatte definiert entfernt wird und anschließend der fehlende Werkstoff durch das selektive Laserschmelzen (Selective Laser Melting SLM) wieder aufzubauen.

Vorteilhafte Weiterbildungen sind in den Unteransprüchen angegeben.

So wird in einer vorteilhaften Weiterbildung ein Werkstoff für das Selective Laser Melting verwendet, der einen erhöhten Erosionswiderstand aufweist. Vorteilhafterweise wird hier ein Stellit verwendet. Ein weiterer Werkstoff der verwendet werden kann ist ein Nickelbasiswerkstoff.

Erfindungsgemäß wird somit ein Austausch von geschädigten Schaufeln durch neue Turbinenschaufeln nicht mehr erforderlich sein. Dadurch entfallen Fertigungs- und Materialkosten für neue Turbinenschaufeln. Außerdem können die Materialien mit optimiertem Erosionswiderstand zu einer Lebensdauerverlängerung aufgebracht werden, was schließlich auch zu einer Erhöhung der Betriebssicherheit führt.

In einer vorteilhaften Weiterbildung wird als Energiestrahlung eine Laserstrahlung verwendet.

Alternativ hierzu kann erfindungsgemäß eine Elektronenstrahlung als Energiestrahlung verwendet werden.

Die Erfindung wird anhand eines Ausführungsbeispiels nun näher erläutert. Darin zeigen:
- Figur 1: eine Turbinenschaufel mit einem geschädigtem Bereiche,
- Figur 2: eine Turbinenschaufel mit einer definierten Abtragung des beschädigten Bereiches,
- Figur 3: schematische Darstellung des Reparaturverfahrens und
- Figur 4: alternative Ausführung der schematischen Darstellung des Reparaturverfahrens.

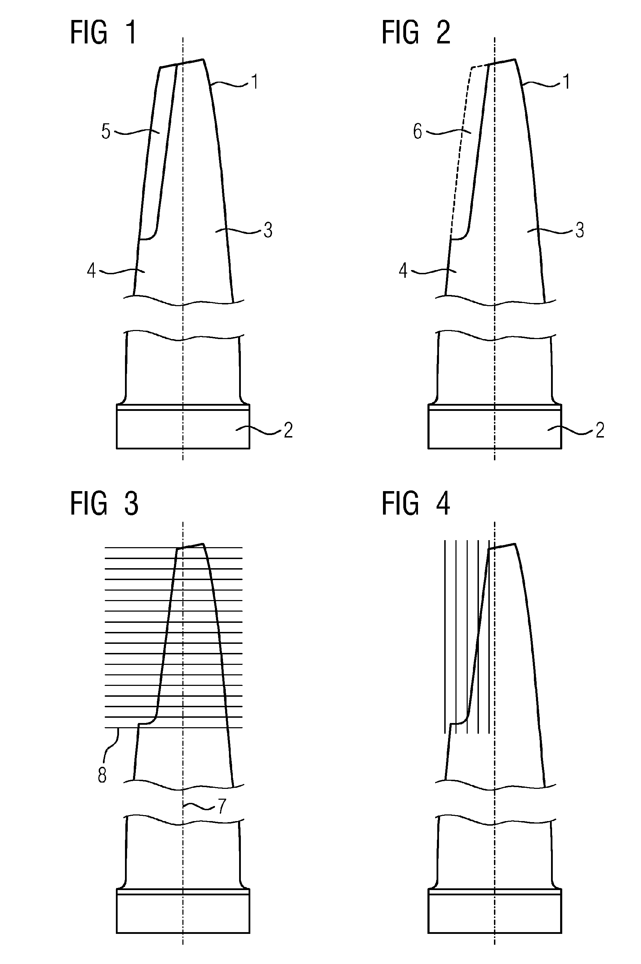

Figur 1 zeigt eine Turbinenschaufel 1. Solche Turbinenschaufeln 1 werden beispielsweise in Dampfturbinen eingesetzt. Die Turbinenschaufel 1 umfasst einen Schaufelfuß 2 und einen Schaufelbereich 3. Durch Tropfenschlagerosion kann an einer Eintrittskante 4 ein geschädigter Bereich 5 entstanden sein. Dieser geschädigte Bereich 5 wird, wie in Figur 2 dargestellt, definiert abgetragen, so dass die Turbinenschaufel fehlendes Material 6 an der Eintrittskante 4 aufweist.

Dieses fehlende Material 6 wird, wie in Figur 3 dargestellt, wieder ersetzt durch das Selective Laser Melting-Verfahren. Hierbei wird ein Werkstoff in Pulverform auf den Bereich aufgetragen. Dies erfolgt, wie in Figur 3 dargestellt, in einer Ebene 8, die im Wesentlichen senkrecht zur Turbinenschaufelrichtung 7 ausgebildet ist.

Mittels einer Energiestrahlung wird der Werkstoff lokal umgeschmolzen und nach Erstarrung bildet sich eine feste Materialschicht. Auf diese feste Materialschicht wird eine weitere dünne Schicht des Werkstoffs in Pulverform aufgebracht und mittels der Energiestrahlung lokal umgeschmolzen. Nach der Erstarrung bildet sich eine weitere feste Materialschicht. Als Energiestrahlung wird Laserstrahlung oder Elektronenstrahlung verwendet.

Wie in Figur 3 dargestellt, erfolgt die schichtweise Bearbeitung der Turbinenschaufel von der Ebene 8 ausgehend parallel in Richtung der Turbinenschaufel 7. Hierbei wird ein Werkstoff verwendet, der einen höheren Erosionswiderstand aufweist. Der Werkstoff Stellit wird hierbei verwendet. Alternativ kann der Werkstoff Nickelbasiswerkstoff verwendet werden.

Die Figur 4 zeigt eine alternative Ausführungsform des Reparaturverfahrens. Der Unterschied zu Figur 3 besteht darin, dass die Ebene 8, in der durch Selective Laser Melting ein neues Material aufgebracht wird, nicht mehr senkrecht zur Turbinenschaufelrichtung 7 ausgerichtet ist, sondern parallel zur Turbinenschaufelrichtung 7 angeordnet ist. Das bedeutet, dass die Schicht in Richtung der Eintrittskante 4 schichtweise aufgebracht wird durch das Laser Melting-Verfahren.

Anschließend wird die Turbinenschaufel 1 durch mechanische Fertigungsverfahren noch weiter bearbeitet.

## Patentansprüche

1. Verfahren zum Reparieren einer Turbinenschaufel (1), wobei die Turbinenschaufel (1) einen geschädigten Bereich (5) aufweist und dieser Bereich (5) definiert materialabtragend entfernt wird und anschließend ein Werkstoff in Pulverform auf dem entfernten Bereich (5) angeordnet und mittels einer Energiestrahlung lokal umgeschmolzen wird und nach Erstarrung eine feste Materialschicht bildet,
wobei eine weitere dünne Schicht des Werkstoffs in Pulverform auf die feste Materialschicht aufgebracht und mittels der Energiestrahlung lokal umgeschmolzen wird und nach Erstarrung eine feste Materialschicht bildet.

2. Verfahren nach Anspruch 1,
wobei als Werkstoff ein Werkstoff mit erhöhtem Erosionswiderstand aufgebracht wird.

3. Verfahren nach Anspruch 1 oder 2,
wobei als Werkstoff Stellit verwendet wird.

4. Verfahren nach Anspruch 1 oder 2,
wobei als Werkstoff ein Nickelbasiswerkstoff verwendet wird.

5. Verfahren nach einem der vorhergehenden Ansprüche,
wobei als Energiestrahlung eine Laserstrahlung verwendet wird.

6. Verfahren nach einem der Ansprüche 1 bis 4,
wobei als Energiestrahlung eine Elektronenstrahlung verwendet wird.
